(19) **Europäisches Patentamt**
**European Patent Office**
**Office européen des brevets**

(11) **EP 1 519 363 B1**

(12) **EUROPEAN PATENT SPECIFICATION**

(45) Date of publication and mention
of the grant of the patent:
**24.07.2013 Bulletin 2013/30**

(51) Int Cl.:
*G10L 25/00* *(2013.01)*    *H04N 5/04* *(2006.01)*
*G10L 15/04* *(2013.01)*    *G10L 21/04* *(2013.01)*

(21) Application number: **04029183.3**

(22) Date of filing: **25.02.2002**

(54) **Method for time aligning signals using characterizations based on auditory events**

Verfahren zur Zeitabgleichung von Signalen unter Verwendung von Charakterisierungen auf Basis von Hörereignissen

Méthode d'alignement temporel de signaux utilisant des caractérisations basées sur des évenements auditifs

(84) Designated Contracting States:
**AT BE CH CY DE DK ES FI FR GB GR IE IT LI LU MC NL PT SE TR**

(30) Priority: **25.05.2001 US 293825 P**
**11.01.2002 US 45644**
**23.01.2002 US 351498 P**
**12.02.2002 US 204317**

(43) Date of publication of application:
**30.03.2005 Bulletin 2005/13**

(62) Document number(s) of the earlier application(s) in accordance with Art. 76 EPC:
**02707896.3 / 1 390 942**

(73) Proprietor: **DOLBY LABORATORIES LICENSING CORPORATION**
**San Francisco**
**California 94103 (US)**

(72) Inventors:
• **Crockett, Brett G.**
**San Francisco**
**California 94103 (US)**
• **Smithers, Michael J.**
**San Francisco**
**California 94103 (US)**

(74) Representative: **MERH-IP**
**Matias Erny Reichl Hoffmann**
**Paul-Heyse-Strasse 29**
**80336 München (DE)**

(56) References cited:
**EP-A- 0 372 155      WO-A-91/19989**
**US-A- 4 624 009      US-A- 5 040 081**
**US-B1- 6 211 919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The invention relates to audio signals. More particularly, the invention relates to characterizing audio signals and using characterizations to time align or synchronize audio signals wherein one signal has been derived from the other or in which both have been derived from the same other signal. Such synchronization is useful, for example, in restoring television audio to video synchronization (lip-sync) and in detecting a watermark embedded in an audio signal (the watermarked signal is compared to an unwatermarked version of the signal). The invention may be implemented so that a low processing power process brings two such audio signals into substantial temporal alignment.

### BACKGROUND ART

The division of sounds into units perceived as separate is sometimes referred to as "auditory event analysis" or "auditory scene analysis" ("ASA"). An extensive discussion of auditory scene analysis is set forth by Albert S. Bregman in his book Auditory Scene Analysis - The Perceptual Organization of Sound, Massachusetts Institute of Technology, 1991, Fourth printing, 2001, Second MIT Press paperback edition. In addition, United States Patent 6,002,776 to Bhadkamkar, et al, December 14, 1999 cites publications dating back to 1976 as "prior art work related to sound separation by auditory scene analysis." However, the Bhadkamkar, et al patent discourages the practical use of auditory scene analysis, concluding that "[t]echniques involving auditory scene analysis, although interesting from a scientific point of view as models of human auditory processing, are currently far too computationally demanding and specialized to be considered practical techniques for sound separation until fundamental progress is made."

Bregman notes in one passage that "[w]e hear discrete units when the sound changes abruptly in timbre, pitch, loudness, or (to a lesser extent) location in space." (*Auditory Scene Analysis - The Perceptual Organization of Sound,* supra at page 469). Bregman also discusses the perception of multiple simultaneous sound streams when, for example, they are separated in frequency.

There are many different methods for extracting characteristics or features from audio. Provided the features or characteristics are suitably defined, their extraction can be performed using automated processes. For example "ISO/IEC JTC 1/SC 29/WG 11" (MPEG) is currently standardizing a variety of audio descriptors as part of the MPEG-7 standard. A common shortcoming of such methods is that they ignore ASA. Such methods seek to measure, periodically, certain "classical" signal processing parameters such as pitch, amplitude, power, harmonic structure and spectral flatness.

Such parameters, while providing useful information, do not analyze and characterize audio signals into elements perceived as separate according to human cognition.

Auditory scene analysis attempts to characterize audio signals in a manner similar to human perception by identifying elements that are separate according to human cognition. By developing such methods, one can implement automated processes that accurately perform tasks that heretofore would have required human assistance.

The identification of separately perceived elements would allow the unique identification of an audio signal using substantially less information than the full signal itself. Compact and unique identifications based on auditory events may be employed, for example, to identify a signal that is copied from another signal (or is copied from the same original signal as another signal).

U.S. Patents Re 33,535, 5,202,761, 6,211,919, and 6,246,439 describe systems, in which a signature of an audio signal is embedded in a video signal prior to transmission or storage that may result in the audio and video getting out of synchronism. At a reproduction point, a signature may be derived from the audio signal and compared to the signature embedded in the video signal in order to restore their synchronism. The time alignment of the signals may be useful, for example, in restoring television audio to video synchronization (lip-sync).

U.S. patent 6,211,919 discloses methods acording to the pre-characterizing portions of claims 1 and 2.

### DISCLOSURE OF THE INVENTION

It is an object of the invention to provide methods that allow a fast and accurate time alignment of an audio signal and another signal, e.g. a video signal, after both signals have been subjected to differential time offsets as a result of storage and/or transmission of the signals.

This object is achieved by a method as claimed in claim 1 and a method as claimed in claim 2. Preferred embodiments of the invention are defined in the dependent claims.

is described that generates a unique reduced-information characterization of an audio signal that may be used to identify the audio signal. The characterization may be considered a "signature" or "fingerprint" of the audio signal. According to the present invention, an auditory scene analysis (ASA) is performed to identify auditory events as the basis for characterizing an audio signal. Ideally, the auditory scene analysis identifies auditory events that are most likely to be perceived by a human listener even after the audio has undergone processing, such as low bit rate coding or acoustic transmission through a loudspeaker. The audio signal may be characterized by the boundary locations of auditory events and, optionally, by the dominant frequency subband of each auditory event. The resulting information pattern, constitutes a compact audio fingerprint or signature that may be compared to the fingerprint or signature of a related audio signal to determine quickly and/or with low processing power the time offset between the original audio signals. The reduced-information characteristics have substantially the same relative timing as the audio signals they represent.

The auditory scene analysis method according to the present invention provides a fast and accurate method of time aligning two audio signals, particularly music, by comparing signatures containing auditory event information. ASA extracts information underlying the perception of similarity, in contrast to traditional methods that extract features less fundamental to perceiving similarities between audio signals (such as pitch amplitude, power, and harmonic structure). The use of ASA improves the chance of finding similarity in, and hence time aligning, material that has undergone significant processing, such as low bit coding or acoustic transmission through a loudspeaker.

In the embodiments discussed below, it is assumed that the two audio signals under discussion are derived from a common source. The method of the present invention determines the time offset of one such audio signal with respect to the other so that they may be brought into approximate synchronism with respect to each other.

Although in principle the invention may be practiced either in the analog or digital domain (or some combination of the two), in practical embodiments of the invention, audio signals are represented by samples in blocks of data and processing is done in the digital domain.

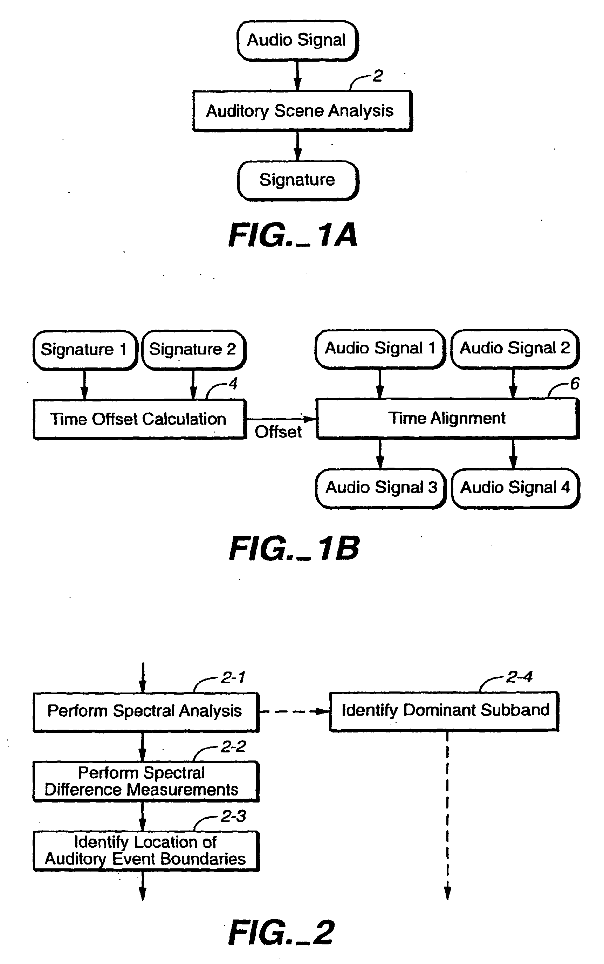

Referring to FIG. 1A, auditory scene analysis 2 is applied to an audio signal in order to produce a "signature" or "fingerprint," related to that signal. In this case, there are two audio signals of interest. They are similar in that one is derived from the other or both have been previously derived from the same original signal. Thus, auditory scene analysis is applied to both signals. For simplicity, FIG. 1A shows only the application of ASA to one signal. As shown in FIG. 1B, the signatures for the two audio signals, Signature 1 and Signature 2, are applied to a time offset calculation function 4 that calculates an "offset" output that is a measure of the relative time offset between the two signatures.

Because the signatures are representative of the audio signals but are substantially shorter (*i.e.,* they are more compact or have fewer bits) than the audio signals from which they were derived, the time offset between the signatures can be determined much faster than it would take to determine the time offset between the audio signals. Moreover, because the signatures retain substantially the same relative timing relationship as the audio signals from which they are derived, a calculation of the offset between the signatures is usable to time align the original audio signals. Thus, the offset output of function 4 is applied to a time alignment function 6. The time alignment function also receives the two audio signals, Audio signal 1 and Audio signal 2 (from which Signature 1 and 2 were derived), and provides two audio signal outputs, Audio signal 3 and Audio signal 4. It is desired to adjust the relative timing of Audio signal 1 with respect to Audio signal 2 so that they are in time alignment (synchronism) or are nearly in time alignment. To accomplish this, one may be time shifted with respect to the other or, in principle, both may be time shifted. In practice, one of the audio signals is a "pass through" of Audio signal 1 or Audio signal 2 (*i.e.,* it is substantially the same signal) and the other is a time shifted version of the other audio signal that has been temporally modified so that Audio Signal 3 and Audio Signal 4 are in time synchronism or nearly in time synchronism with each other, depending on the resolution accuracy of the offset calculation and time alignment functions. If greater alignment accuracy is desired, further processing may be applied to Audio Signal 3 and/or Audio Signal 4 by one or more other processes that form no part of the present invention.

The time alignment of the signals may be useful, for example, in restoring television audio to video synchronization (lip-sync) and in detecting a watermark embedded in an audio signal. In the former case, a signature of the audio is embedded in the video signal prior to transmission or storage that may result in the audio and video getting out of synchronism. At a reproduction point, a signature may be derived from the audio signal and compared to the signature embedded in the video signal in order to restore their synchronism.

For some applications, the processes of FIGS. 1A and 1B should be real-time. For other applications, they need not be real-time. In a real-time application, the process stores a history (a few seconds, for example) of the auditory scene analysis for each input signal. Periodically, that event history is employed to update the offset calculation in order to continually correct the time offset. The auditory scene analysis information for each of the input signals may be generated in real time, or the information for either of the signals may already be present (assuming that some offline auditory scene analysis processing has already been performed). One use for a real-time system is, for example, an audio/video aligner as mentioned above. One series of event boundaries is derived from the audio; the other series of event boundaries is recovered from the video (assuming some previous embedding of the audio event boundaries into the video). The two event boundary sequences can be periodically compared to determine the time offset between the audio and video in order to improve the lip sync, for example.

Thus, both signatures may be generated from the audio signals at nearly the same time that the time offset of the signatures is calculated and used to modify the alignment of the audio signals to achieve their substantial coincidence.

Alternatively, one of the signatures to be compared may be carried along with the audio signal from which it was derived, for example, by embedding the signature in another signal, such as a video signal as in the case of audio and video alignment as just described. As a further alternative, both signatures may be generated in advance and only the comparison and timing modification performed in real time. For example, in the case of two sources of the same television program (with both video and audio), both with embedded audio signatures; the respective television signals (with accompanying audio) could be synchronized (both video and audio) by comparing the recovered signatures. The relative timing relationship of the video and audio in each television signal would remain unaltered. The television signal synchronization would occur in real time, but neither signature would be generated at that time nor simultaneously with each other.

In accordance with aspects of the present invention, a computationally efficient process for dividing audio into temporal segments or "auditory events" that tend to be perceived as separate is provided.

A powerful indicator of the beginning or end of a perceived auditory event is believed to be a change in spectral content. In order to detect changes in timbre and pitch (spectral content) and, as an ancillary result, certain changes in amplitude, the audio event detection process according to an aspect of the present invention detects changes in spectral composition with respect to time. Optionally, according to a further aspect of the present invention, the process may also detect changes in amplitude with respect to time that would not be detected by detecting changes in spectral composition with respect to time.

In its least computationally demanding implementation, the process divides audio into time segments by analyzing the entire frequency band of the audio signal (full bandwidth audio) or substantially the entire frequency band (in practical implementations, band limiting filtering at the ends of the spectrum are often employed) and giving the greatest weight to the loudest audio signal components. This approach takes advantage of a psychoacoustic phenomenon in which at smaller time scales (20 milliseconds (msec) and less) the ear may tend to focus on a single auditory event at a given time. This implies that while multiple events may be occurring at the same time, one component tends to be perceptually most prominent and may be processed individually as though it were the only event taking place. Taking advantage of this effect also allows the auditory event detection to scale with the complexity of the audio being processed. For example, if the input audio signal being processed is a solo instrument, the audio events that are identified will likely be the individual notes being played. Similarly for an input voice signal, the individual components of speech, the vowels and consonants for example, will likely be identified as individual audio elements. As the complexity of the audio increases, such as music with a drumbeat or multiple instruments and voice, the auditory event detection identifies the most prominent (*i.e.,* the loudest) audio element at any given moment. Alternatively, the "most prominent" audio element may be determined by taking hearing threshold and frequency response into consideration.

Optionally, according to further aspects of the present invention, at the expense of greater computational complexity, the process may also take into consideration changes in spectral composition with respect to time in discrete frequency bands (fixed or dynamically determined or both fixed and dynamically determined bands) rather than the full bandwidth. This alternative approach would take into account more than one audio stream in different frequency bands rather than assuming that only a single stream is perceptible at a particular time.

Even a simple and computationally efficient process according to an aspect of the present invention for segmenting audio has been found useful to identify auditory events.

An auditory event detecting process of the present invention may be implemented by dividing a time domain audio waveform into time intervals or blocks and then converting the data in each block to the frequency domain, using either a filter bank or a time-frequency transformation, such as a Discrete Fourier Transform (DFT) (implemented as a Fast Fourier Transform (FFT) for speed). The amplitude of the spectral content of each block may be normalized in order to eliminate or reduce the effect of amplitude changes. Each resulting frequency domain representation provides an indication of the spectral content (amplitude as a function of frequency) of the audio in the particular block. The spectral content of successive blocks is compared and each change greater than a threshold may be taken to indicate the temporal start or temporal end of an auditory event.

In order to minimize the computational complexity, only a single band of frequencies of the time domain audio waveform may be processed, preferably either the entire frequency band of the spectrum (which may be about 50 Hz to 15 kHz in the case of an average quality music system) or substantially the entire frequency band (for example, a band defining filter may exclude the high and low frequency extremes).

Preferably, the frequency domain data is normalized, as is described below. The degree to which the frequency domain data needs to be normalized gives an indication of amplitude. Hence, if a change in this degree exceeds a predetermined threshold, that too may be taken to indicate an event boundary. Event start and end points resulting from spectral changes and from amplitude changes may be ORed together so that event boundaries resulting from either type of change are identified.

In practical embodiments in which the audio is represented by samples divided into blocks, each auditory event temporal start and stop point boundary necessarily coincides with a boundary of the block into which the time domain audio waveform is divided. There is a trade off between real-time processing requirements (as larger blocks require less processing overhead) and resolution of event location (smaller blocks provide more detailed information on the location of auditory events).

As a further option, as suggested above, but at the expense of greater computational complexity, instead of processing the spectral content of the time domain waveform in a single band of frequencies, the spectrum of the time domain waveform prior to frequency domain conversion may be divided into two or more frequency bands. Each of the frequency bands may then be converted to the frequency domain and processed as though it were an independent channel. The resulting event boundaries may then be ORed together to define the event boundaries for that channel. The multiple frequency bands may be fixed, adaptive, or a combination of fixed and adaptive. Tracking filter techniques employed in audio noise reduction and other arts, for example, may be employed to define adaptive frequency bands (e.g., dominant simultaneous sine waves at 800 Hz and 2 kHz could result in two adaptively-determined bands centered on those two frequencies).

Other techniques for providing auditory scene analysis may be employed to identify auditory events in the present invention.

## DESCRIPTION OF THE DRAWINGS

FIG. 1A — is a flow chart showing the process of extraction of a signature from an audio signal in accordance with the present invention. The audio signal may, for example, represent music (*e.g.*, a musical composition or "song").

FIG. 1 B — is a flow chart illustrating a process for the time alignment of two audio signal signals in accordance with the present invention.

FIG. 2 — is a flow chart showing the process of extraction of audio event locations and the optional extraction of dominant subbands from an audio signal in accordance with the present invention.

FIG. 3 — is a conceptual schematic representation depicting the step of spectral analysis in accordance with the present invention.

FIGS. 4A and 4B — are idealized audio waveforms showing a plurality of auditory event locations and auditory event boundaries in accordance with the present invention.

## BEST MODE FOR CARRYING OUT THE INVENTION

In a practical embodiment of the invention, the audio signal is represented by samples that are processed in blocks of 512 samples, which corresponds to about 11.6 msec of input audio at a sampling rate of 44.1 kHz. A block length having a time less than the duration of the shortest perceivable auditory event (about 20 msec) is desirable. It will be understood that the aspects of the invention are not limited to such a practical embodiment. The principles of the invention do not require arranging the audio into sample blocks prior to determining auditory events, nor, if they are, of providing blocks of constant length. However, to minimize complexity, a fixed block length of 512 samples (or some other power of two number of samples) is useful for three primary reasons. First, it provides low enough latency to be acceptable for real-time processing applications. Second, it is a power-of-two number of samples, which is useful for fast Fourier transform (FFT) analysis. Third, it provides a suitably large window size to perform useful auditory scene analysis.

In the following discussions, the input signals are assumed to be data with amplitude values in the range [-1,+1].

*Auditory Scene Analysis 2 (FIG. 1A)*

Following audio input data blocking (not shown), the input audio signal is divided into auditory events, each of which tends to be perceived as separate, in process 2 ("Auditory Scene Analysis") of FIG. 1A. Auditory scene analysis may be accomplished by an auditory scene analysis (ASA) process discussed above. Although one suitable process for performing auditory scene analysis is described in further detail below, the invention contemplates that other useful techniques for performing ASA may be employed.

FIG. 2 outlines a process in accordance with techniques of the present invention that may be used as the auditory scene analysis process of FIG. 1A. The ASA step or process 2 is composed of three general processing substeps. The first substep 2-1 ("Perform Spectral Analysis") takes the audio signal, divides it into blocks and calculates a spectral profile or spectral content for each of the blocks. Spectral analysis transforms the audio signal into the short-term frequency domain. This can be performed using any filterbank; either based on transforms or banks of band-pass filters, and in either linear or warped frequency space (such as the Bark scale or critical band, which better approximate the characteristics of the human ear). With any filterbank there exists a tradeoff between time and frequency. Greater time resolution, and hence shorter time intervals, leads to lower frequency resolution. Greater frequency resolution, and hence narrower subbands, leads to longer time intervals.

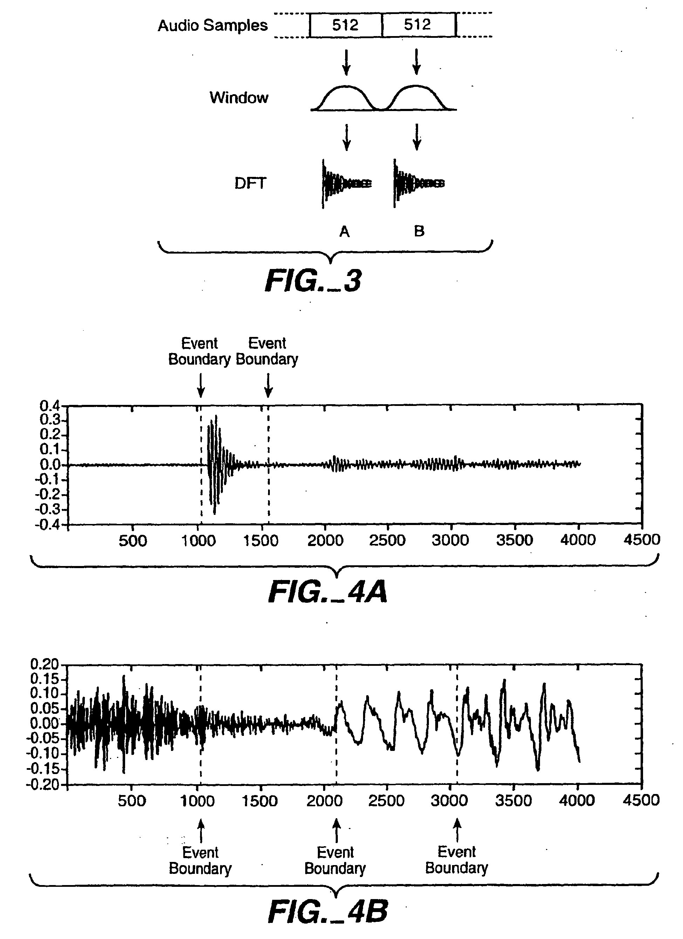

The first substep calculates the spectral content of successive time segments of the audio signal. In a practical embodiment, described below, the ASA block size is 512 samples of the input audio signal (FIG.3). In the second substep 2-2, the differences in spectral content from block to block are determined ("Perform spectral profile difference measurements"). Thus, the second substep calculates the difference in spectral content between successive time segments of the audio signal. In the third substep 2-3 ("Identify location of auditory event boundaries"), when the spectral difference between one spectral-profile block and the next is greater than a threshold, the block boundary is taken to be an auditory event boundary. Thus, the third substep sets an auditory event boundary between successive time segments when the difference in the spectral profile content between such successive time segments exceeds a threshold. As discussed above, a powerful indicator of the beginning or end of a perceived auditory event is believed to be a change in spectral content. The locations of event boundaries are stored as a signature. An optional process step 2-4 ("Identify dominant subband") uses the spectral analysis to identify a dominant frequency subband that may also be stored as part of the signature.

In this embodiment, auditory event boundaries define auditory events having a length that is an integral multiple of spectral profile blocks with a minimum length of one spectral profile block (512 samples in this example). In principle, event boundaries need not be so limited.

Either overlapping or non-overlapping segments of the audio may be windowed and used to compute spectral profiles of the input audio. Overlap results in finer resolution as to the location of auditory events and, also, makes it less likely to miss an event, such as a transient. However, as time resolution increases, frequency resolution decreases. Overlap also increases computational complexity. Thus, overlap may be omitted. FIG. 3 shows a conceptual representation of non-overlapping 512 sample blocks being windowed and transformed into the frequency domain by the Discrete Fourier Transform (DFT). Each block may be windowed and transformed into the frequency domain, such as by using the DFT, preferably implemented as a Fast Fourier Transform (FFT) for speed.

The following variables may be used to compute the spectral profile of the input block:

N = number of samples in the input signal
M = number of windowed samples used to compute spectral profile
P = number of samples of spectral computation overlap
Q = number of spectral windows/regions computed

In general, any integer numbers may be used for the variables above. However, the implementation will be more efficient if M is set equal to a power of 2 so that standard FFTs may be used for the spectral profile calculations. In a practical embodiment of the auditory scene analysis process, the parameters listed may be set to:

M = 512 samples (or 11.6 msec at 44.1 kHz)
P = 0 samples (no overlap)

The above-listed values were determined experimentally and were found generally to identify with sufficient accuracy the location and duration of auditory events. However, setting the value of P to 256 samples (50% overlap) has been found to be useful in identifying some hard-to-find events. While many different types of windows may be used to minimize spectral artifacts due to windowing, the window used in the spectral profile calculations is an M-point Hanning, Kaiser-Bessel or other suitable, preferably non-rectangular, window. The above-indicated values and a Hanning window type were selected after extensive experimental analysis as they have shown to provide excellent results across a wide range of audio material. Non-rectangular windowing is preferred for the processing of audio signals with predominantly low frequency content. Rectangular windowing produces spectral artifacts that may cause incorrect detection of events. Unlike certain codec applications where an overall overlap/add process must provide a constant level, such a constraint does not apply here and the window may be chosen for characteristics such as its time/frequency resolution and stopband rejection.

In substep 2-1 (FIG. 2), the spectrum of each M-sample block may be computed by windowing the data by an M-point Hanning, Kaiser-Bessel or other suitable window, converting to the frequency domain using an M-point Fast Fourier Transform, and calculating the magnitude of the FFT coefficients. The resultant data is normalized so that the largest magnitude is set to unity, and the normalized array of M numbers is converted to the log domain. The array need not be converted to the log domain, but the conversion simplifies the calculation of the difference measure in substep 2-2. Furthermore, the log domain more closely matches the log domain amplitude nature of the human auditory system. The resulting log domain values have a range of minus infinity to zero. In a practical embodiment, a lower limit can be imposed on the range of values; the limit may be fixed, for example -60 dB, or be frequency-dependent to reflect the lower audibility of quiet sounds at low and very high frequencies. (Note that it would be possible to reduce the size of the array to M/2 in that the FFT represents negative as well as positive frequencies).

Substep 2-2 calculates a measure of the difference between the spectra of adjacent blocks. For each block, each of the M (log) spectral coefficients from substep 2-1 is subtracted from the corresponding coefficient for the preceding block, and the magnitude of the difference calculated (the sign is ignored). These M differences are then summed to one number. Hence, for the whole audio signal, the result is an array of Q positive numbers; the greater the number the more a block differs in spectrum from the preceding block. This difference measure could also be expressed as an average difference per spectral coefficient by dividing the difference measure by the number of spectral coefficients used in the sum (in this case M coefficients).

Substep 2-3 identifies the locations of auditory event boundaries by applying a threshold to the array of difference measures from substep 2-2 with a threshold value. When a difference measure exceeds a threshold, the change in spectrum is deemed sufficient to signal a new event and the block number of the change is recorded as an event boundary. For the values of M and P given above and for log domain values (in substep 2-1) expressed in units of dB, the threshold may be set equal to 2500 if the whole magnitude FFT (including the mirrored part) is compared or 1250 if half the FFT is compared (as noted above, the FFT represents negative as well as positive frequencies — for the magnitude of the FFT, one is the mirror image of the other). This value was chosen experimentally and it provides good auditory event boundary detection. This parameter value may be changed to reduce (increase the threshold) or increase (decrease the threshold) the detection of events.

The details of this practical embodiment are not critical. Other ways to calculate the spectral content of successive time segments of the audio signal, calculate the differences between successive time segments, and set auditory event boundaries at the respective boundaries between successive time segments when the difference in the spectral profile content between such successive time segments exceeds a threshold may be employed.

For an audio signal consisting of Q blocks (of size M samples), the output of the auditory scene analysis process of function 2 of FIG. 1A is an array $B(q)$ of information representing the location of auditory event boundaries where q = 0, 1, ... , Q-1. For a block size of M = 512 samples, overlap of P = 0 samples and a signal-sampling rate of 44.1kHz, the auditory scene analysis function 2 outputs approximately 86 values a second. Preferably, the array $B(q)$ is stored as the signature, such that, in its basic form, without the optional dominant subband frequency information, the audio signal's signature is an array $B(q)$ representing a string of auditory event boundaries.

An example of the results of auditory scene analysis for two different signals is shown in FIGS. 4A and 4B. The top plot, FIG. 4A, shows the results of auditory scene processing where auditory event boundaries have been identified at samples 1024 and 1536. The bottom plot, FIG. 4B, shows the identification of event boundaries at samples 1024, 2048 and 3072.

*Identify dominant subband (optional)*

For each block, an optional additional step in the ASA processing (shown in FIG. 2) is to extract information from the audio signal denoting the dominant frequency "subband" of the block (conversion of the data in each block to the frequency domain results in information divided into frequency subbands). This block-based information may be converted to auditory-event based information, so that the dominant frequency subband is identified for every auditory event. This information for every auditory event provides the correlation processing (described below) with further information in addition to the auditory event boundary information. The dominant (largest amplitude) subband may be chosen from a plurality of subbands, three or four, for example, that are within the range or band of frequencies where the human ear is most sensitive. Alternatively, other criteria may be used to select the subbands.

The spectrum may be divided, for example, into three subbands. The preferred frequency range of the subbands is:

| | |
|---|---|
| Subband 1 | 301 Hz to 560Hz |
| Subband 2 | 560Hz to 1938Hz |
| Subband 3 | 1938Hz to 9948Hz |

To determine the dominant subband, the square of the magnitude spectrum (or the power magnitude spectrum) is summed for each subband. This resulting sum for each subband is calculated and the largest is chosen. The subbands may also be weighted prior to selecting the largest. The weighting may take the form of dividing the sum for each subband by the number of spectral values in the subband, or alternatively may take the form of an addition or multiplication to emphasize the importance of a band over another. This can be useful where some subbands have more energy on average than other subbands but are less perceptually important.

Considering an audio signal consisting of Q blocks, the output of the dominant subband processing is an array DS(q) of information representing the dominant subband in each block (q = 0, 1, ... , Q-1). Preferably, the array DS(q) is stored in the signature along with the array $B(q)$. Thus, with the optional dominant subband information, the audio signal's signature is two arrays $B(q)$ and $DS(q)$, representing, respectively, a string of auditory event boundaries and a dominant frequency subband within each block. Thus, in an idealized example, the two arrays could have the following values (for a case in which there are three possible dominant subbands).

1 0 1 0 0 0 1 0 0 1 0 0 0 0 0 1 0 (Event Boundaries)

1 1 2 2 2 2 1 1 1 3 3 3 3 3 3 1 1 (Dominant Subbands)

In most cases, the dominant subband remains the same within each auditory event, as shown in this example, or has an average value if it is not uniform for all blocks within the event. Thus, a dominant subband may be determined for each auditory event and the array $DS(q)$ may be modified to provide that the same dominant subband is assigned to each block within an event.

*Time Offset Calculation*

The output of the Signature Extraction (FIG. 1A) is one or more arrays of auditory scene analysis information that are stored as a signature, as described above. The Time Offset Calculation function (FIG. 1 B) takes two signatures and calculates a measure of their time offset. This is performed using known cross correlation methods.

Let $S_1$ (length $Q_1$) be an array from Signature 1 and $S_2$ (length $Q_2$) an array from Signature 2. First, calculate the cross-correlation array $R_{E_1E_2}$ (see, for example, John G. Proakis, Dimitris G. Manolakis, Digital Signal Processing: Principles, Algorithms, and Applications, Macmillan Publishing Company, 1992, ISBN 0-02-396815-X).

$$R_{E_1E_2}(l) = \sum_{q=-\infty}^{\infty} S_1(q).S_2(q-l) \qquad l = 0, \pm 1, \pm 2, .... \qquad (1)$$

In a practical embodiment, the cross-correlation is performed using standard FFT based techniques to reduce execution time.

Since both $S_1$ and $S_2$ are finite in length, the non-zero component of $R_{E_1E_2}$ has a length of $Q_1 + Q_2 - 1$. The lag $l$ corresponding to the maximum element in $R_{E_1E_2}$ represents the time offset of $S_2$ relative to $S_1$.

$$l_{peak} = l \quad \text{for} \quad MAX(R_{E_1E_2}(l)) \qquad (2)$$

This offset has the same units as the signature arrays $S_1$ and $S_2$. In a practical implementation, the elements of $S_1$ and $S_2$ have an update rate equivalent to the audio block size used to generate the arrays minus the overlap of adjacent blocks: that is, *M - P = 512 - 0 = 512* samples. Therefore the offset has units of 512 audio samples.

*Time Alignment*

The Time Alignment function 6 (FIG. 1B) uses the calculated offset to time align the two audio signals. It takes as inputs, Audio Signals 1 and 2 (used to generate the two signatures) and offsets one in relation to the other such that they are both more closely aligned in time. The two aligned signals are output as Audio Signals 3 and 4. The amount of delay or offset applied is the product of the relative signature delay $l_{peak}$ between signature $S_2$ and $S_1$, and the resolution *M-P,* in samples, of the signatures.

For applications where only the passage common to the two sources is of interest (as in the case of watermark detection where unmarked and marked signals are to be directly compared), the two sources may be truncated to retain only that common passage.

For applications where no information is to be lost, one signal may be offset by the insertion of leading samples. For example let $x_1(n)$ be the samples of Audio Signal 1 with a length of $N_1$ samples, and $x_2(n)$ be the samples of Audio Signal 2 with a length of $N_2$ samples. Also $l_{peak}$ represents the offset of $S_2$ relative to $S_1$ in units of *M-P* audio samples.

The sample offset $D_{21}$ of Audio Signal 2 relative to Audio Signal 1 is the product of the signature offset $l_{peak}$

and *M-P*.

$$D_{21} = l_{peak} \cdot (M - P) \tag{3}$$

If $D_{21}$ is zero, the both input signals are output unmodified as signals 3 and 4 (see FIG. 1B). If $D_{21}$ is positive then input signal $x_1(n)$ is modified by inserting leading samples.

$$x_1'(m) = \begin{cases} 0 & 0 \le m < D_{21} \\ x_1(n) & 0 \le n < L_1 \quad m = n + D_{21} \end{cases} \tag{4}$$

Signals $x_1'(n)$ and $x_2(n)$ are output as Signals 3 and 4 (see FIG. 1B).
If $D_{21}$ is negative then input signal $x_2(n)$ is modified by inserting leading samples.

$$x_2'(m) = \begin{cases} 0 & 0 \le m < -D_{21} \\ x_2(n) & 0 \le n < L_2 \quad m = n - D_{21} \end{cases} \tag{5}$$

*Computation Complexity and Accuracy*

The computational power required to calculate the offset is proportional to the lengths of the signature arrays, $Q_1$ and $Q_2$. Because the process described has some offset error, the time alignment process of the present invention may be followed by a conventional process having a finer resolution that works directly with the audio signals, rather than signatures. For example such a process may take sections of the aligned audio signals (slightly longer than the offset error to ensure some overlap) and cross correlate the sections directly to determine the exact sample error or fine offset.
Since the signature arrays are used to calculate the sample offset, the accuracy of the time alignment method is limited to the audio block size used to generate the signatures: in this implementation, 512 samples. In other words this method will have error in the sample offset of approximately plus/minus half the block size: in this implementation $\pm256$ samples.
This error can be reduced by increasing the resolution of the signatures; however there exists a tradeoff between accuracy and computational complexity. Lower offset error requires finer resolution in the signature arrays (more array elements) and this requires higher processing power in computing the cross correlation. Higher offset error requires coarser resolution in the signature arrays (less array elements) and this requires lower processing power in computing the cross correlation.

*Applications*

Watermarking involves embedding information in a signal by altering the signal in some predefined way, including the addition of other signals, to create a marked signal. The detection or extraction of embedded information often relies on a comparison of the marked signal with the original source. Also the marked signal often undergoes other processing including audio coding and speaker/microphone acoustic path transmission. The present invention provides a way of time aligning a marked signal with the original source to then facilitate the extraction of embedded information.
Subjective and objective methods for determining audio coder quality compare a coded signal with the original source, used to generate the coded signal, in order to create a measure of the signal degradation (for example an ITU-R 5 point impairment score). The comparison relies on time alignment of the coded audio signal with the original source signal. This method provides a means of time aligning the source and coded signals.
Other applications of the invention are possible, for example, improving the lip-syncing of audio and video signals, as mentioned above.
The present invention and its various aspects may be implemented as software functions performed in digital signal processors, programmed general-purpose digital computers, and/or special purpose digital computers. Interfaces between analog and digital signal streams may be performed in appropriate hardware and/or as functions in software and/or firmware.

**Claims**

1. A method of preparing a first signal and a second signal for storage or transmission, wherein the second signal is an audio signal associated with the first signal, comprising

   a) deriving a reduced-information characterization of the second signal, the reduced-information characterization being composed of less information than the signal from which it is derived,
   b) modifying the first signal by embedding said characterization in the first signal, and
   c) storing the modified first signal and the second signal or transmitting them,

   **characterized in that** step a) comprises deriving said characterization based on auditory scene analysis.

2. A method for time aligning a first signal and a second signal, wherein the second signal is an audio signal associated with the first signal,

   a) receiving the first signal and the second signal wherein the first signal has embedded within it a reduced-information characterization of the second signal, the reduced-information characterization being composed of less information than the signal from which it is derived,
   b) recovering the embedded characterization as a first reduced-information characterization from said first signal, and
   c) modifying the temporal relationship of the second signal with respect to the first signal such that the second signal and first signal are more closely aligned in time,

   **characterized in that** step c) comprises

   c1) deriving a second reduced-information characterization of said second signal from the second signal received in step a) based on auditory scene analysis,
   c2) calculating the time offset of the first characterization with respect to the second characterization, and
   c3) modifying the temporal relationship of the second signal with respect to the first signal in response to said time offset such that the second signal and first signal are more closely aligned in time.

3. The method of claim 2 wherein calculating the time offset includes performing a cross-correlation of said characterizations.

4. The method of claim 1, 2 or 3 wherein said first signal is a video signal.

5. The method of any one of claims 1-4 wherein said reduced-information characterizations based on auditory scene analysis are arrays of information representing at least the location of auditory event boundaries.

6. The method of claim 5 wherein said auditory event boundaries are determined by
   calculating the spectral content of successive time segments of said audio signal,
   calculating the difference in spectral content between successive time segments of said audio signal, and
   identifying an auditory event boundary as the boundary between successive time segments when the difference in the spectral content between such successive time segments exceeds a threshold.

7. The method of claim 5 or claim 6 wherein said arrays of information also represent the dominant frequency subband of each of said auditory events.

**Patentansprüche**

1. Ein Verfahren zum Vorbereiten eines ersten Signals und eines zweiten Signals zur Speicherung oder Übertragung, wobei das zweite Signal ein Audiosignal ist, das mit dem ersten Signal assoziiert ist, wobei das Verfahren aufweist

a) Ableiten einer reduzierte-Information-Charakterisierung des zweiten Signals, wobei die reduzierte-Information-Charakterisierung aus weniger Information als das Signal besteht, aus dem sie abgeleitet wird,
b) Modifizieren des ersten Signals durch Einbetten der Charakterisierung in das erste Signal, und
c) Speichern des modifizierten ersten Signals und des zweiten Signals oder Übertragen dieser,

**dadurch gekennzeichnet, dass** Schritt a) ein Ableiten der Charakterisierung basierend auf einer auditiven Szene-Analyse aufweist.

2. Ein Verfahren zum zeitlichen Ausrichten eines ersten Signals und eines zweiten Signals, wobei das zweite Signal ein Audiosignal ist, das mit dem ersten Signal assoziiert ist,

a) Empfangen des ersten Signals und des zweiten Signals, wobei das erste Signal eine reduzierte-Information-Charakterisierung des zweiten Signals darin eingebettet hat, wobei die reduzierte-Information-Charakterisierung aus weniger Information als das Signal besteht, aus dem sie abgeleitet wird,
b) Wiederherstellen der eingebetteten Charakterisierung als eine erste reduzierte-Information-Charakterisierung aus dem ersten Signal, und
c) Modifizieren der zeitlichen Beziehung des zweiten Signals hinsichtlich des ersten Signals derart, dass das zweite Signal und das erste Signal zeitlich näher ausgerichtet sind,

**dadurch gekennzeichnet, dass** Schritt c) aufweist

c1) Ableiten einer zweiten reduzierte-Information-Charakterisierung des zweiten Signals aus dem zweiten Signal, das in Schritt a) empfangen wird, basierend auf einer auditiven Szene-Analyse,
c2) Berechnen des Zeitversatzes der ersten Charakterisierung hinsichtlich der zweiten Charakterisierung, und
c3) Modifizieren der zeitlichen Beziehung des zweiten Signals hinsichtlich des ersten Signals in Reaktion auf den Zeitversatz derart, dass das zweite Signal und das erste Signal zeitlich näher ausgerichtet sind.

3. Das Verfahren gemäß Anspruch 2, wobei das Berechnen des Zeitversatzes ein Durchführen einer Kreuzkorrelation der Charakterisierungen umfasst.

4. Das Verfahren gemäß Anspruch 1, 2 oder 3, wobei das erste Signal ein Videosignal ist.

5. Das Verfahren gemäß einem der Ansprüche 1-4, wobei die reduzierte-Information-Charakterisierungen basierend auf einer auditiven Szene-Analyse Arrays von Information sind, die zumindest den Ort von Hör-Ereignis-Grenzen repräsentieren.

6. Das Verfahren gemäß Anspruch 5, wobei die Hör-Ereignis-Grenzen bestimmt werden durch
Berechnen des Spektralinhalts von aufeinanderfolgenden Zeitsegmenten des Audiosignals,
Berechnen der Differenz in einem Spektralinhalt zwischen aufeinanderfolgenden Zeitsegmenten des Audiosignals, und
Identifizieren einer Hör-Ereignis-Grenze als die Grenze zwischen aufeinanderfolgenden Zeitsegmenten, wenn die Differenz in dem Spektralinhalt zwischen aufeinanderfolgenden Zeitsegmenten eine Schwelle übersteigt.

7. Das Verfahren gemäß Anspruch 5 oder Anspruch 6, wobei die Arrays von Information auch das dominante Frequenzteilband jedes der Hör-Ereignisse repräsentieren.

**Revendications**

1. Procédé de préparation d'un premier signal et d'un second signal destiné à la mémorisation ou à la transmission, dans lequel le second signal est un signal audio associé au premier signal, comprenant :

a) la dérivation d'une caractérisation à information réduite du second signal, la caractérisation à information réduite étant constituée de moins d'informations que le signal duquel elle est dérivée,
b) la modification du premier signal par incorporation de ladite caractérisation dans le premier signal, et
c) la mémorisation du premier signal modifié et du second signal ou la transmission de ceux-ci,

**caractérisé en ce que** l'étape a) comprend la dérivation de ladite caractérisation en se fondant sur l'analyse de la scène d'audition.

2. Procédé de réglage de temporisation d'un premier signal et d'un second signal, dans lequel le second signal est un signal audio associé au premier signal,

a) recevant le premier signal et le second signal dans lequel une caractérisation à information réduite du second signal est incorporée dans le premier signal, la caractérisation à information réduite étant constituée de moins d'informations que le signal duquel elle est dérivée,

b) récupérant la caractérisation incorporée comme étant une première caractérisation à information réduite dudit premier signal, et

c) modifiant la relation temporelle du second signal par rapport au premier signal de telle sorte que le second signal et le premier signal bénéficient d'un réglage de temporisation plus étroit,

**caractérisé en ce que** l'étape c) comprend

c1) la dérivation d'une seconde caractérisation à information réduite dudit second signal à partir du second signal reçu à l'étape a) en se fondant sur une analyse de la scène d'audition,

c2) le calcul du décalage dans le temps de la première caractérisation par rapport à la seconde caractérisation, et

c3) la modification de la relation temporelle du second signal par rapport au premier signal en réponse au dit décalage dans le temps de telle sorte que le second signal et le premier signal bénéficient d'un réglage de temporisation plus étroit.

3. Procédé selon la revendication 2, dans lequel le calcul du décalage dans le temps comprend la réalisation d'une corrélation croisée desdites caractérisations.

4. Procédé selon la revendication 1, 2 ou 3, dans lequel ledit premier signal est un signal vidéo.

5. Procédé selon l'une quelconque des revendications 1 - 4, dans lequel lesdites caractérisations à information réduite fondées sur l'analyse de la scène d'audition sont des séries d'informations représentant au moins l'emplacement des limites de l'événement auditif.

6. Procédé selon la revendication 5, dans lequel lesdites limites de l'événement auditif sont déterminées en calculant le contenu spectral de segments temporels successifs dudit signal audio, en calculant la différence de contenu spectral entre des segments temporels successifs dudit signal audio, et en identifiant une limite de l'événement auditif comme étant la limite entre des segments temporels successifs lorsque la différence de contenu spectral entre ces segments temporels successifs est supérieure à un seuil.

7. Procédé selon la revendication 5 ou la revendication 6, dans lequel lesdites séries d'information représentent également la sous-bande de fréquence dominante de chacun desdits événements auditifs.

**FIG._1A**

**FIG._1B**

**FIG._2**

**FIG._3**

**FIG._4A**

**FIG._4B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6002776 A, Bhadkamkar
- US RE33535 E
- US 5202761 A
- US 6211919 B
- US 6246439 B

**Non-patent literature cited in the description**

- **ALBERT S. BREGMAN.** Auditory Scene Analysis - The Perceptual Organization of Sound. Second MIT Press, 1991
- **JOHN G. PROAKIS ; DIMITRIS G. MANOLAKIS.** Digital Signal Processing: Principles, Algorithms, and Applications. Macmillan Publishing Company, 1992